# EUROPEAN PATENT SPECIFICATION

(11) **EP 3 595 157 B1**
(45) Date of publication and mention of the grant of the patent: **23.11.2022**
(21) Application number: 17899501.5
(22) Date of filing: 28.12.2017
(51) Int. Cl.: H02M 1/32, H02M 7/483, H02H 3/02, H02H 3/16, H02H 7/122, H02M 5/12

(54) **POWER CONVERSION DEVICE**
STROMWANDLUNGSVORRICHTUNG
DISPOSITIF DE CONVERSION DE PUISSANCE

(30) Priority: 06.03.2017 JP 2017041285
(43) Date of publication of application: 15.01.2020
(73) Proprietor: Toshiba Energy Systems & Solutions Corporation, Kawasaki-shi, Kanagawa 212-0013 (JP); Hokkaido Electric Power Company, Incorporated, Hokkaido 060-8677 (JP)
(72) Inventor: ARAI, Takuro, Tokyo 105-8001 (JP); SUZUKI, Daichi, Tokyo 105-8001 (JP)
(74) Representative: AWA Sweden AB
(86) International application number: PCT/JP2017/047229
(87) International publication number: WO 2018/163582

(56) References cited:
- EP-A1- 3 107 172
- WO-A1-2015/121983
- WO-A1-2016/170869
- JP-A- 2004 039 438
- JP-A- 2016 208 743
- US-A1- 2013 200 859

## Description

### FIELD

Embodiments of the present disclosure relate to a power conversion device that mutually converts power between AC and DC.

### BACKGROUND

Conventionally, three-phase and two-level converters have been applied to power conversion devices that mutually convert power between AC and DC. Since a three-phase and two-level converter includes six semiconductor switching devices that are minimum requisite to construct a power conversion device which outputs three-phase AC from DC, there are advantages such that downsizing and cost reduction can be accomplished.

Meanwhile, when an input DC voltage is defined as Vdc, a switching between two values of +Vdc/2 and -Vdc/2 is executed by pulse width modulation (PWM) for each phase, an output voltage waveform becomes a quasi-AC waveform. In the case of a high-voltage motor drive which utilizes a high-voltage withstandable switching device and which a PWM switching frequency cannot be increased, and of a power-system connecting devices for DC power transmission, etc., a filter that includes a reactor and a capacitor is installed in a three-phase AC output to reduce switching harmonic components, however it is necessary to increase the filter capacity to reduce the harmonic component which flows out to in a power system down to a level that does not affect other devices, resulting in an increase in costs and an increase in weight.

Accordingly, research and development are advancing for a power converter, such as a modular-multilevel converter (referred to as an MMC below), which has unit converters each including a DC voltage source like a capacitor and connected in multistages and which can convert a high voltage substantially equal to a power-distribution-system voltage. The MMC can simplify a transformer which has large weight and volume, and which has relatively large cost in the entire system. Moreover, the unit converter includes switching devices and a DC capacitor, and since an output voltage and a voltage waveform can be multi-leveled and be similar to a sinusoidal waveform by shifting the ON and OFF timings of the switching devices, an advantage such that a harmonic filter becomes unnecessary can be achieved.

According to a circuit scheme in which such unit converters are connected in multistages, in order to control the voltage values of the DC capacitors of the respective unit converters to be uniform, it is theoretically necessary to always flow a reflux current that refluxes the DC power supply. When three phases are connected to the same DC power supply, if the DC-voltage synthetic values of the respective phases differ even slightly, an excessive short-circuit current flows between the phases, and the device may be broken. Conventionally, in order to protect the device, a buffer reactor is installed in each phase so as to restrict the short-circuit current from becoming excessive.

EP 3107172 A1 relates to a protection system for DC power transmission system, AC/DC converter, and DC power transmission system breaking method.

### CITATION LIST

### PATENT LITERATURES

Patent Document 1: JP 2013-115837A

### SUMMARY

Conventionally, the power conversion devices have an AC circuit breaker in an AC current path to an AC system to prepare for occasions such that a ground fault or short-circuit of the power conversion device occurs and an excessive accident current flows from the AC system due to an insulation breakdown originating from lightning strike or aged deterioration, or a false operation originating from a human error. This AC circuit breaker extinguishes arc discharge produced between contacts when the contacts are separated from each other and breaks the above-described excessive accident current, thereby electrically disconnecting the power conversion device from the AC system.

Hence, for the AC circuit breaker to break the current, it is necessary that the accident current that flows through this circuit breaker is reduced down to a level that enables arc discharge extinction. The accident current from the AC system is usually an AC current, and the polarity thereof changes per one cycle of AC. Hence, when the accident current decreases down to a level that enables arc discharge extinction within one cycle of AC, the breaking can be executed safely and promptly.

However, when an accident, such as a ground fault or a short-circuit, occurs in a single phase among the three phases of the power conversion device while the three phases are unbalanced, the magnitude of the accident current changes for each phase, and a DC accident current may flow in the AC system side. In this case, since the accident current becomes a current in which a DC component is superimposed on an AC current, the accident current does not decrease down to a level that enables arc discharge extinction, and the AC circuit breaker is unable to break the accident current.

A power conversion device according to the embodiments of the present disclosure has been made in order to address the above-described technical problems, and an objective is to provide a power conversion device which is capable of decreasing an accident current passing through an AC circuit breaker even if a DC accident current flows in an AC system side, and which is capable of breaking the accident current safely and promptly.

A power conversion device according to present embodiments is provided between a DC terminal that includes a positive-side DC terminal and a negative-side DC terminal, and a three-phase AC terminal, and is configured to mutually convert power between DC and three-phase AC, the power conversion device including:
a positive-side arm and a negative-side arm each comprising a plurality of unit converters connected in multistage, each unit converter including a switching device and a capacitor, the positive-side arm and the negative-side arm being provided in each of the three phases, the positive-side arm and the negative-side arm being connected in series between the positive-side DC terminal and the negative-side DC terminal in each of the three phases;
an AC circuit breaker provided in an AC current path between a three-phase AC system and a connection point between the positive-side arm and the negative-side arm;
   a short-circuit switch which is provided between the positive-side DC terminal and the negative-side DC terminal, and which connects the positive-side DC terminal and the negative-side DC terminal via a grounded point or directly; and
a control device,
wherein the control device comprises:
   a detection unit that is configured to detect an accident occurrence at the connection point between the positive-side arm and the negative-side arm in a certain phase;
   a circuit-breaker control unit that is configured to output a breaking command to the AC circuit breaker; and
   a short-circuit-switch control unit that is configured to output a circuit close command to the short-circuit switch,
   wherein a buffer reactor is provided at the positive-side arm and at the negative-side arm, respectively, the buffer reactor of the positive-side arm being connected in series between the AC terminal and the positive-side arm, and
   the control device is configured to cause the short-circuit switch control unit to output the close command to the short-circuit switch, and is configured to cause the circuit-breaker control unit to output the breaking command to the AC circuit breaker after a signal indicating a close state of the short-circuit switch is received.

### BRIEF DESCRIPTION OF DRAWINGS

FIG. 1 is a diagram illustrating a structure of a power conversion device according to a first embodiment;
FIG. 2 is a diagram illustrating a structure of a chopper cell;
FIG. 3 is a sequence diagram for a control device according to the first embodiment;
FIG. 4 is a diagram illustrating a ground-fault current path when a ground-fault accident occurs at a connection point between a positive-side arm and a negative-side arm in one phase;
FIG. 5 is a diagram illustrating a current path through which a zero-point auxiliary current flows;
FIG. 6A is a current waveform diagram for an AC circuit breaker before and after an accident occurs when no short-circuit switch is provided, and FIG. 6B is a current waveform diagram for the AC circuit breaker before and after an accident occurs when a short-circuit switch is provided;
FIG. 7 is a diagram illustrating a short-circuit current path when a short-circuit accident occurs in the positive-side arm in one phase;
FIG. 8 is a diagram illustrating a structure of the power conversion device according to a modified example of the first embodiment;
FIG. 9 is a diagram illustrating a structure of a power conversion device according to a second embodiment;
FIG. 10 is a current waveform diagram for the AC circuit breaker before and after an accident occurs when the short-circuit switch is provided at a neutral line of a multi-winding transformer;
FIG. 11 is a diagram illustrating a structure of a power conversion device according to a third embodiment;
FIG. 12 is an example sequence diagram for a control device according to an example out of the scope of the present invention; and
FIG. 13 is a diagram illustrating a structure of a full-bridge cell.

### DETAILED DESCRIPTION

### [1. First Embodiment]

### [1-1. Structure]

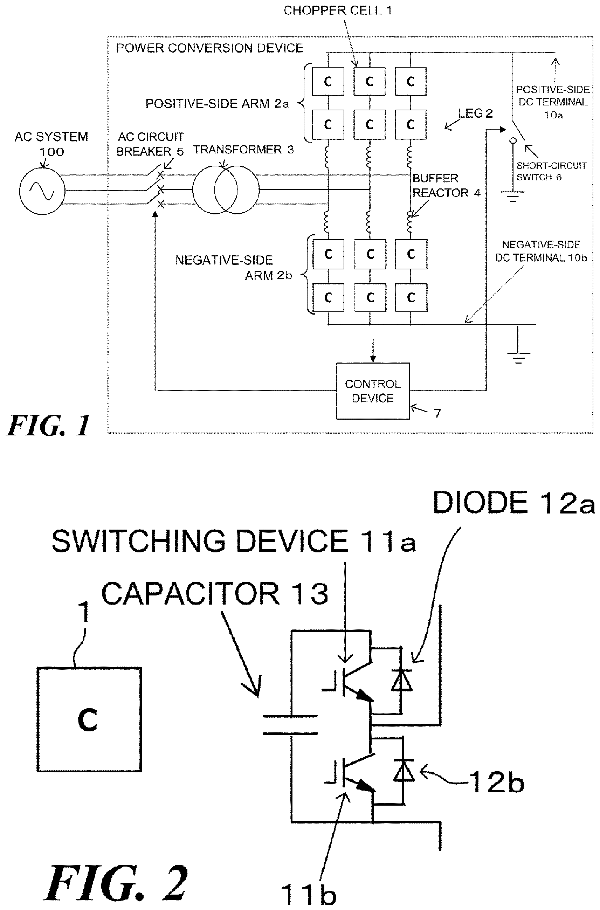

A power conversion device according to this embodiment will be described with reference to FIG. 1 and FIG. 2. FIG. 1 is a diagram illustrating a structure of the power conversion device according to this embodiment.

The power conversion device mutually converts power between AC and DC, converts from AC to DC or from DC to AC, and transmits the converted power. The power conversion device is connected between a DC terminal that includes a positive-side DC terminal 10a and a negative-side DC terminal 10b, and a three-phase AC terminal connected to a three-phase AC system 100. The positive-side DC terminal 10a and the negative-side DC terminal 10b are connected to, for example, another power conversion device and a DC line, and the power conversion device is adopted for a frequency conversion from 50 Hz to 60 Hz, etc., and for a DC power transmission system. Note that in order to describe each circuit structure, the positive-side-DC-terminal-10a side will be referred to as a "positive-side", and the negative-side-DC-terminal-10b side will be referred to as a "negative-side".

The power conversion device includes an MMC, a transformer 3, buffer reactors 4, an AC circuit breaker 5, a short-circuit switch 6, and a control device 7.

The MMC includes a series of a plurality of unit converters, and outputs an arbitrary voltage such as a stepwise AC voltage by shifting the respective switching timings of the unit converters. The unit converter is, for example, a chopper cell 1 as illustrated in FIG. 2.

The chopper cell 1 includes two switching devices 11a and 11b, diodes 12a and 12b, and a capacitor 13, and outputs a desired DC voltage by the switching operations of the switching devices 11a and 11b with the capacitor 13 being a voltage source.

More specifically, the switching devices 11a and 11b are connected in series with each other to form a leg, and the capacitor 13 is connected in parallel with this leg. An example switching device 11a and 11b is a controllable self-extinguishing device, such as an IEGT, a GTO, a GCT, a MOSFET, or an IGBT. The feedback diodes 12a and 12b are connected in reverse-parallel with the switching devices 11a and 11b. The chopper cell 1 outputs a DC voltage Vc of the capacitor 13 when the switching device 11a is ON, and outputs zero voltage when the switching device 11b is ON.

The MMC has such unit converters connected in series in a multistage between the positive-side DC terminal 10a and the negative-side DC terminal 10b in each phase that is a U-phase, a V-phase, and a W-phase. When the arrangement of the unit converters between the DC terminals 10a and 10b is defined as a leg 2, the legs 2 in each phase are connected in parallel with each other between the positive-side DC terminal 10a and the negative-side DC terminal 10b.

Such a leg is roughly divided into a positive-side arm 2a and a negative-side arm 2b. That is, the positive-side arm 2a is a set of unit converters that have the unit converters connected in series in a multistage, and have one end connected to the positive-side DC terminal 10a. The negative-side arm 2b is a set of unit converters that have the unit converters connected in series in a multistage, and have one end connected to the negative-side DC terminal 10b. The positive-side arm 2a and the negative-side arm 2b are connected to each other via the respective other ends. The terminals of the respective arms 2a and 2b connected to the positive-side DC terminal 10a and the negative-side DC terminal 10b are the DC terminals of the MMC, and a connection point between the positive-side arm 2a and the negative-side arm 2b serves as an AC terminal.

The transformer 3 is connected between the AC terminal and the AC system 100. The transformer 3 is for an electrical insulation between the AC system 100 and the power conversion device and for matching a difference in voltage level between the MMC and the AC system 100, and is not always necessary.

The buffer reactors 4 are provided at the positive-side arm 2a and at the negative-side arm 2b, respectively. That is, the buffer reactor 4 of the positive-side arm 2a is connected in series between the AC terminal and the positive-side arm 2a. The buffer reactor 4 of the negative-side arm 2b is connected in series between the AC terminal and the negative-side arm 2b. The buffer reactors 4 prevent an excessive short-circuit current from flowing between the phases when the respective DC voltages of the three phases become different.

The AC circuit breaker 5 is connected between the AC terminal and the AC system 100. The AC circuit breaker 5 is a switch capable of closing and opening a circuit in accordance with an input signal. The AC circuit breaker 5 is a mechanical circuit breaker capable of opening and closing the circuit by contacting and separating contacts, and, for example, a gas circuit breaker, etc., is applicable.

The short-circuit switch 6 is connected between the DC terminal and the connection point in this embodiment, and is capable of selecting an open-circuit or a close-circuit state in accordance with an input signal. In this embodiment, the negative-side DC terminal 10b is a ground potential, and the short-circuit switch 6 is connected between a grounded point and the positive-side DC terminal 10a. When the short-circuit switch 6 is turned ON, the positive-side DC terminal 10a and the negative-side DC terminal 10b are short-circuited via the grounded point. The short-circuit switch 6 may be connected between the grounded point and the negative-side DC terminal 10b with the positive-side DC terminal 10a being a ground potential as long as the short-circuit switch 6 is connected to all of the legs 2 of the MMC in the three phases, or. Moreover, the short-circuit switch 6 may be connected between the positive-side DC terminal 10a and the negative-side DC terminal 10b.

The short-circuit switch 6 is a switch that has a rating that can withstand against a short-circuit, and that has a prompt response that turns ON in the order of several ten ms. An example short-circuit switch 6 is a semiconductor switch such as a thyristor.

The power conversion device is provided with measuring instruments (unillustrated) that measures the voltage and current at each unit. The measuring instruments are an ammeter and a voltmeter, and measure, for example, the currents of the positive-side arm 2a and the negative-side arm 2b, the voltage and current at the transformer 3, and the voltage and current at the DC terminal.

The control device 7 controls the power conversion device. The control device 7 includes a detection unit which obtains the current value and voltage value at each unit from the measuring instruments, and which detects an accident occurrence, a circuit-breaker control unit which generates and outputs a signal to cause the AC circuit breaker 5 to break the AC current path between the AC system 100 and the AC terminal, and a short-circuit-switch control unit which outputs a close command to the short-circuit switch 6. The control device 7 controls the switching timing of the switching devices 11a and 11b of the chopper cell 1.

Note that the AC circuit breaker 5 and the short-circuit switch 6 are each provided with a switch which is called an auxiliary contact that operates mechanically in synchronization with the main open and close states of the AC circuit breaker 5 and of the short-circuit switch 6, and the ON and OFF state of this auxiliary contact may be read by a sensor, and a signal indicating the open and close states may be input to the control device 7.

### [1-2. Action]

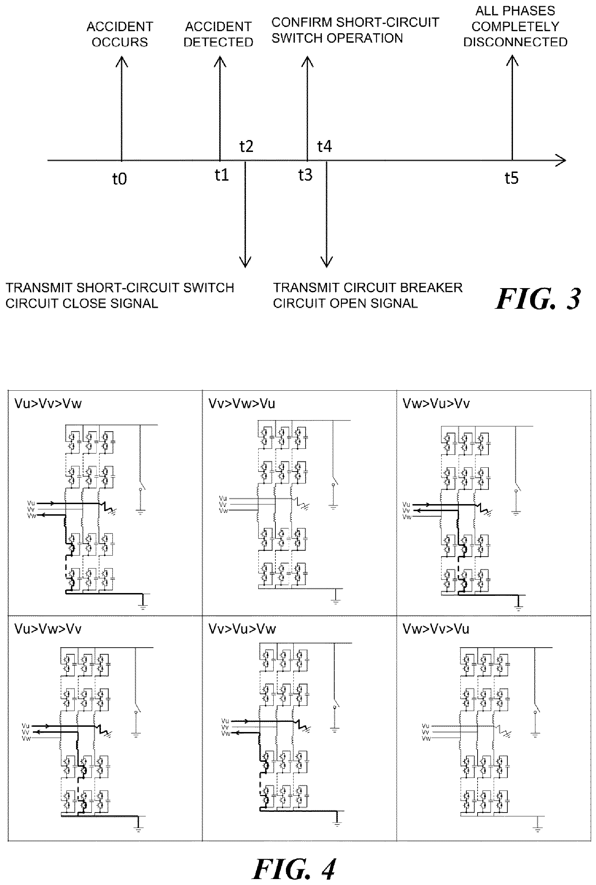

An action of the power conversion device that employs the above-described structure will be described with reference to FIG. 3 to FIG. 6. FIG. 3 is a sequence diagram for the control device 7. The control device 7 detects an accident from the current and voltage values of each unit by the detection unit. For example, when a ground-fault accident occurs, the detection unit obtains the current values at the positive-side arm 2a, the negative-side arm 2b, and the secondary side of the transformer 3, and obtains a differential current therefrom, to detect an occurrence of the ground-fault accident at the connection point between the positive-side arm 2a and the negative-side arm 2b in a certain phase. In the following description, the ground-fault accident will be described as an example accident.

FIG. 4 illustrates a ground-fault current path when the ground-fault accident occurs at the connection point between the positive-side arm 2a and the negative-side arm 2b in one phase, and illustrates the path for the three-phase AC in one cycle. As illustrated in FIG. 4, when the ground-fault accident occurs, an accident current that is a ground-fault current flows from the AC system 100 to the ground-fault point. This ground-fault current passes through the negative-side arms 2b in the other two phases where no ground-fault accident has not occurred from the grounded point of the negative-side DC terminal 10b of the power conversion device, and returns to the AC system 100.

After detecting the accident, the control device 7 turns OFF the switching devices 11a and 11b to cause the MMC to be in a gate-block state.

If the AC circuit breaker 5 is caused to open, contacts are separated, and arc discharge is produced between the contacts. In general, when there is no accident, the arc discharge is extinguished at a current zero-cross point and the accident current is broken, and since a ground fault occurs in a phase, the ground-fault currents in the three phases becomes unbalanced. For example, when a ground fault occurs in the U-phase, as illustrated in FIG. 4, even though it depends on the large-small relation of the AC voltages in the three phases, the ground-fault current is supplied toward the ground-fault point from the AC system 100, becoming a path which passes through the negative-side arms 2b in the V-phase and in the W-phase via the grounded point of the negative-side DC terminal 10b, and which returns to the AC system 100, and thus the three phases are unbalanced. At this time, there may be a case in which a DC component is superimposed on the ground-fault current which passes through the AC circuit breaker 5, and the current is decreased down to a level that enables a break. For example, when a ground fault occurs in the U-phase, the DC current component in the U-phase may become large, the AC ground-fault current may be shifted, and may not cross a current zero point.

Accordingly, the control device 7 outputs, to the short-circuit switch 6, the signal that turns ON said switch from the short-circuit-switch control unit. Then, the short-circuit switch 6 is turned ON, the positive-side DC terminal 10a and a ground point is connected, and the positive-side DC terminal 10a and the negative-side DC terminal 10b are short circuited via the grounded point. Consequently, a zero-point auxiliary current that assists to create the current zero point at the accident current starts flowing.

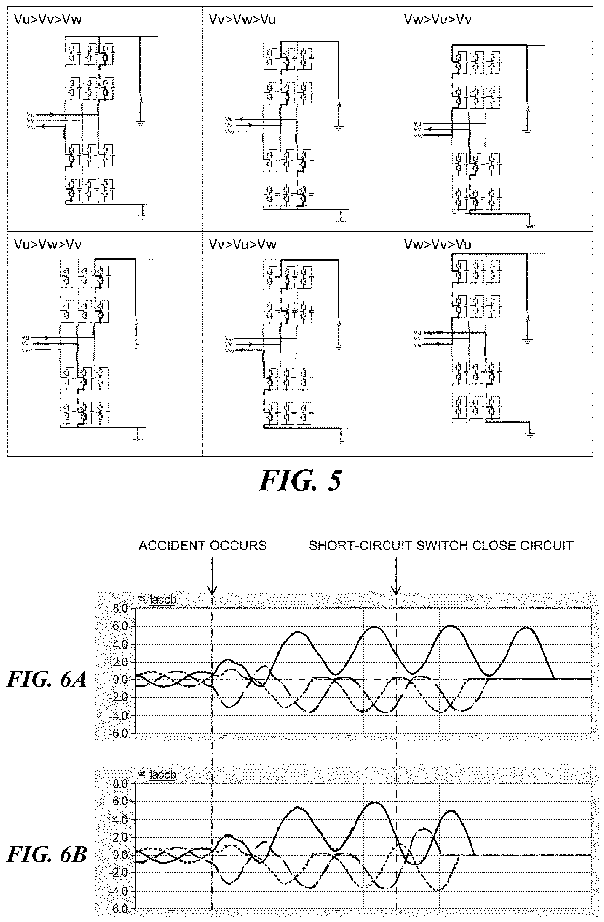

FIG. 5 is a diagram illustrating a current path through which the zero-point auxiliary current flows, and illustrates a path for a three-phase AC in one cycle. As illustrated in FIG. 5, the phase through which the current flow changes depending on the large-small relation of the AC voltages in the three phases, but since the short-circuit switch 6 is connected to all of the legs 2 in the three phases via the positive-side DC terminal 10a, by causing a short-circuit between DC terminals 10a and 10b, all of the three phases are balanced, and the zero-point auxiliary current flows. Accordingly, since the zero-point auxiliary current that is balanced in the three phases is added to the ground-fault current that is unbalanced in the three phases, both the ground-fault current and the zero-point auxiliary current are supplied from the AC system 100 to the power conversion device. That is, in view of, for example, a time average of one cycle of AC, the accident current that flows through the AC circuit breaker 5 becomes the sum of the ground-fault current and the zero-point auxiliary current, the DC component of the ground-fault current is canceled by the DC component of the zero-point auxiliary current, and the current can be decreased down to the level that enables the AC circuit breaker 5 to execute breaking.

An analysis result which enables to confirm that the current zero-cross point is actually created by the zero-point auxiliary current will be shown. That is, FIG. 6A is a current waveform diagram of the AC circuit breaker before and after an accident occurs when no short-circuit switch 6 is provided, and FIG. 6B is a current waveform diagram of the AC circuit breaker 5 before and after the accident occurs when the short-circuit switch 6 is provided.

As illustrated in FIG. 6A, the current waveform in the accident-occurring phase indicated by a solid line increases from the line where the current is zero after the occurrence of a ground-fault accident, and vibrates up and down, and it can be confirmed that the DC component is superimposed on the ground-fault current. Moreover, it is apparent from the figure that, because the DC component is superimposed, it does not cross the line where the current is zero, and the AC circuit breaker 5 is unable to break the current. Note that the current waveforms in the other two phases indicated by a dashed line and a dotted line decrease from the line where the current is zero after the occurrence of the ground-fault accident, and vibrate up and down, and it can be confirmed that the DC component is superimposed on the ground-fault current due to the adverse effect of the accident in one phase.

In contrast, as illustrated in FIG. 6B, the current waveform in each phase indicates the same behavior as FIG. 6A until the short-circuit switch 6 is turned ON, but after the short-circuit switch 6 is turned ON, the current waveform in the accident phase indicated in a solid line decreases so as to cross the line where the current is zero, and it can be confirmed that the DC component in the ground-fault current is canceled by the zero-point auxiliary current. Note that the current waveform in the other two phases indicated by a dashed line and a dotted line also show a behavior that becomes close to the line where the current is zero after the occurrence of the ground-fault accident, and thus it can be confirmed that the DC component in the ground-fault current is canceled by the zero-point auxiliary current.

As described above, by causing the DC terminals 10a and 10b to short-circuit by the short-circuit switch 6, and to make a zero-point auxiliary current that is balanced in the three phases to flow, the current zero-cross point can be artificially created in the accident current that flows through the AC circuit breaker 5.

As described above, when the short-circuit switch 6 is turned ON, and after receiving the signal that indicates the close state of the short-circuit switch 6, the control device 7 causes the circuit-breaker control unit to cause the AC circuit breaker 5 to break the AC current path. Since the current zero point can be created artificially, even if an accident occurs and a DC component is superimposed on the accident current, the accident current can be reduced, and the accident current can be broken safely and promptly.

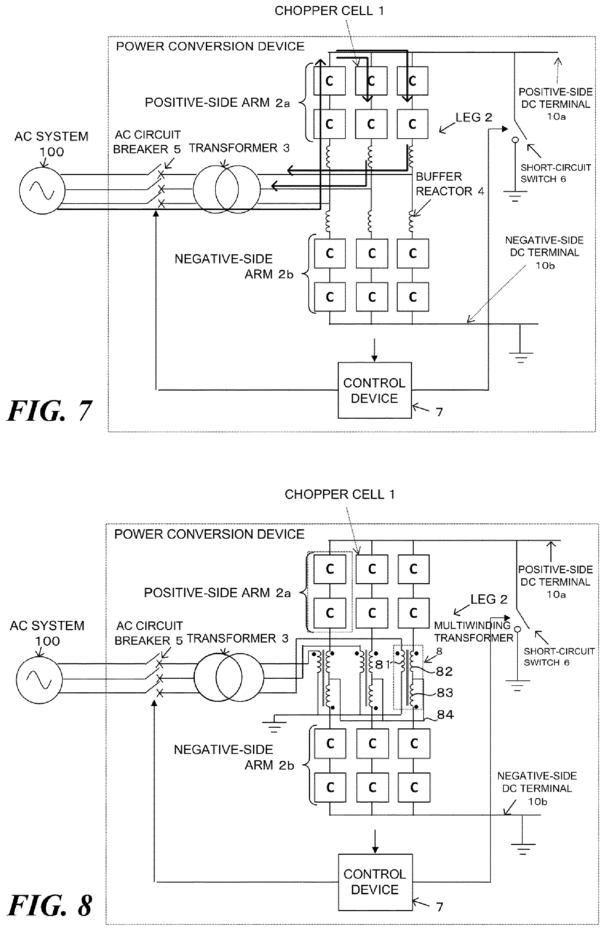

In the above description, although the ground-fault accident has been described as an example, the same action and effect can be achieved in the case of a short-circuit accident. For example, when the positive-side arm 2a or the negative-side arm 2b in a certain phase is short-circuited, as illustrated in FIG. 7, a short-circuit current flows in the positive-side arm 2a or the negative-side arm 2b in a phase where said short circuit has occurred from the AC system 100, and when returning to the AC system 100 via the positive-side arms 2a or the negative-side arms 2b in the other two phases, a DC component may be superimposed on the short-circuit current. Even in such a case, the short-circuit switch 6 decreases the short-circuit current and breaks the accident current safely and promptly.

### [1-3. Effect]

(1) The power conversion device according to this embodiment is provided between the DC terminal that includes the positive-side DC terminal 10a and the negative-side DC terminal 10b, and the three-phase AC terminal, and mutually converts power between DC and three-phase AC, the power conversion device includes a positive-side arm 2a and a negative-side arm 2b each comprising a plurality of unit converters connected in multistage, each unit converter including switching devices 11a, 11b, and a capacitor 13, the positive-side arm and the negative-side arm being connected in series between the positive-side DC terminal 10a and the negative-side DC terminal 10b in each of the three phases, and the short-circuit switch 6 which is provided between the positive-side DC terminal 10a and the negative-side DC terminal 10b, and which connects the positive-side DC terminal 10a and the negative-side DC terminal 10b via the grounded point.

Accordingly, even when an accident, such as a ground fault or a short-circuit, occurs in the power conversion device, and the DC accident current flows in the AC system 100, since the zero-point auxiliary current that includes the DC component can flow from the power conversion device to the AC circuit breaker 5 by short-circuiting the DC terminals 10a and 10b by the short-circuit switch 6, the DC component in the accident current can be reduced. That is, since the short-circuit switch 6 is connected to the positive-side arm 2a or the negative-side arm 2b in all of the three phases, by turning ON the short-circuit switch 6, all of the three phases are balanced, and the zero-point auxiliary current can flow. Accordingly, the current that flows through the AC circuit breaker 5 becomes the sum of the accident current and the zero-point auxiliary current, and the DC component in the accident current which flows through the AC circuit breaker can be canceled. Therefore, even if the three phases are in an unbalance because of an accident, a current zero point can be created, and the accident current can be broken safely and promptly.

(2) The control device 7 which includes the circuit-breaker control unit that outputs a breaking command to the AC circuit breaker 5 provided in the AC current path between the three-phase AC system 100 and the connection point between the positive-side arm 2a and the negative-side arm 2b, and the short-circuit-switch control unit that outputs a close command to the short-circuit switch 6, and the control device 7 causes the circuit-breaker control unit to output the breaking command to the AC circuit breaker 5 after the short-circuit-switch control unit outputs the close command to the short-circuit switch 6 and after a signal indicating the close state of the short-circuit switch 6 is received. This enables the AC circuit breaker 5 to cut off the current upon ensuring that the zero point in the AC circuit breaker is created. Consequently, a defect of other devices such as the short-circuit switch 6 originating from the inoperative AC circuit breaker 5 can be suppressed.

(3) The short-circuit switch 6 is a semiconductor switch. This achieves an instant short-circuit between the positive-side DC terminal 10a and the negative-side DC terminal 10b via a grounded point. That is, since the DC component in the accident current can be instantaneously canceled by the zero-point auxiliary current, the current zero point can be created promptly, preventing the AC circuit breaker 5 from being damaged, and enabling a safe and prompt current breaking.

### [1-4. Modified Example]

A modified example of the power conversion device according to the first embodiment will be described with reference to FIG. 8. This modified example employs the same basic structure as that of the first embodiment. Hence, only the difference from the first embodiment will be described, the same component as that of the first embodiment will be denoted by the same reference numeral, and the detailed description thereof will be omitted.

FIG. 8 is a diagram illustrating a structure of the power conversion device according to the modified example of the first embodiment. This modified example includes a multi-winding transformer 8 instead of the buffer reactor 4. The multi-winding transformer 8 in the U-phase, the V-phase, and the W-phase connected in a star connection. The multi-winding transformer 8 is a transformer that has at least equal to or greater than three windings. The multi-winding transformer 8 includes an AC-system-side winding 81 connected to the three-phase AC system 100, a first DC-system-side winding 82 and a second DC-system-side winding 83 connected in series between the positive-side arm 2a and the negative-side arm 2b, and an unillustrated iron core. The multi-winding transformer 8 may have a stabilizing winding for harmonic suppression which flows out to a system. The windings 81 to 83 are wound around the iron core. The windings 82 and 83 have an equal number of turns, and have opposite polarities by having the respective negative polarities connected with each other.

Moreover, the multi-winding transformer 8 includes a neutral line 84 between the first DC-system-side winding 82 and the second DC-system-side winding 83 in respective three phases. The neutral line 84 is extended from between the first DC-system-side winding 82 and the second DC-system-side winding 83 in respective three phases and connected with each other, so that the multi-winding transformers 8 in the U-phase, the V-phase, and the W-phase are connected with each other.

As described above, by replacing the buffer reactors 4 with the multi-winding transformers 8, a DC current in the power conversion device flows to the negative-side arm 2b from the positive-side arm 2a via the first DC-system-side winding 82 and the second DC-system-side winding 83. Hence, since the first DC-system-side winding 82 and the second DC-system-side winding 83 are connected in series with opposite polarities, DC magnetomotive force by respective flowing DC currents have opposite polarities to each other and are canceled with each other, and no DC magnetic flux is produced in the iron core. Furthermore, since the DC magnetomotive force can be canceled in the same phase, even if an unbalancing occurs in the AC system due to an accident, etc., the iron core of the multi-winding transformer 8 can operate without a non-uniform magnetization and a saturation.

Although the buffer reactor 4 was causing an increase in size of the device and an increase in costs, by utilizing the multi-winding transformer 8, it is no longer necessary to have the buffer reactor 4 between the positive-side arm 2a and the negative-side arm 2b. This achieves downsizing of the device and cost reduction thereof.

### [2. Second Embodiment]

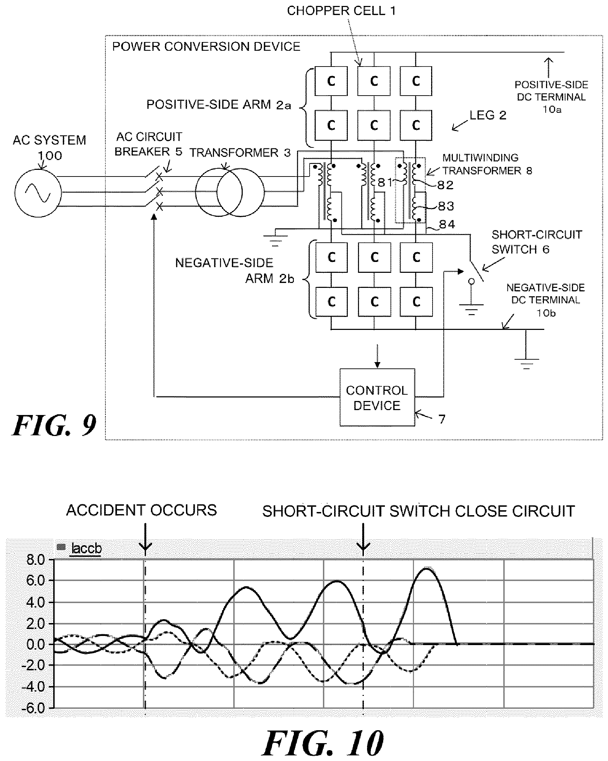

A second embodiment will be described with reference to FIG. 9. The second embodiment employs the same basic structure as that of the modified example of the first embodiment. Accordingly, only the difference from the modified example of the first embodiment will be described, the same component as that of the modified example of the first embodiment will be denoted by the same reference numeral, and the detailed description will be omitted.

FIG. 9 is a diagram illustrating a structure of a power conversion device according to the second embodiment. In the second embodiment, the short-circuit switch 6 connects the neutral line 84 of the multi-winding transformer 8 and a grounded point.

Accordingly, since the neutral line 84 is connected to all of the three phases, the circuit in a close-circuit in which the short-circuit switch 6 is turned ON so that the neutral line 84 and the grounded DC terminal (in this example, the negative-side DC terminal 10b) is short-circuited becomes a circuit structure balanced in the three phases. Hence, the zero-point auxiliary current that flows through this circuit also becomes a current balanced in the three phases. Therefore, the current that flows through the AC circuit breaker 5 becomes the sum of the accident current and the zero-point auxiliary current, and the DC component in the accident current that flows through the AC circuit breaker 5 can be canceled. As illustrated in FIG. 10, the current waveform in the accident-occurring phase indicated by a solid line is reduced so as to cross the line where the current is zero, and it can be confirmed that the DC component in the ground-fault current is canceled by the zero-point auxiliary current. As described above, even if the three phases are unbalanced due to an accident, the current zero point can be created, and the current can be broken promptly.

Moreover, since the voltage to be applied becomes 1/2 in comparison with a case in which the short-circuit switch 6 is connected to the DC terminal, the withstandable voltage of the short-circuit switch 6 can be decreased.

### [3. Third Embodiment]

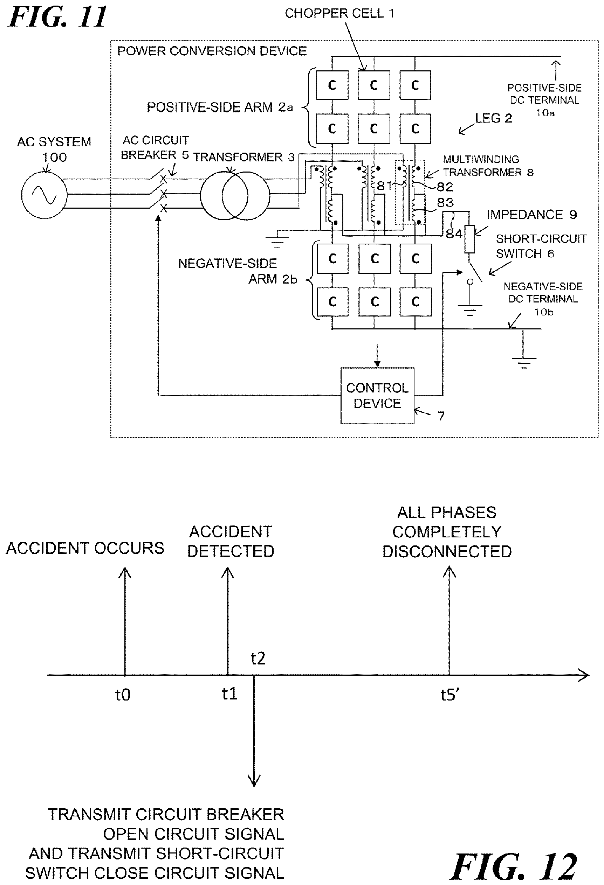

A third embodiment will be described with reference to FIG. 11. The third embodiment employs the same basic structure as that of the second embodiment. Hence, only the difference from the second embodiment will described, the same component as that of the second embodiment will be denoted by the same reference numeral, and the detailed description thereof will be omitted.

FIG. 11 is a diagram illustrating a structure of a power conversion device according to the third embodiment. According to the third embodiment, an impedance 9 is provided between the short-circuit switch 6 and the grounded point. Example impedances 9 are a resistor, a reactor, or a series connection thereof.

As described above, since the impedance 9 is provided in series with the short-circuit switch 6, the magnitude of the zero-point auxiliary current can be changed. For example, when it is desired to increase the magnitude of the zero-point auxiliary current, the impedance 9 is reduced, and when it is desired to decrease the magnitude of the zero-point auxiliary current, the impedance 9 is increased. Accordingly, the accident current that passes through the AC circuit breaker 5 can be reduced, and the current-zero point can be created. Therefore, the adverse effect to the AC system 100 can be minimized.

### [4. Further Example]

A further example out of the scope of the present invention will be described with reference to FIG. 12. The further example employs the same basic structure as that of the first embodiment. Hence, only the difference from the first embodiment will be described, the same component as that of the first embodiment will be denoted by the same reference numeral, and the detailed description will be omitted.

FIG. 12 is a sequence diagram for a control device 7 according to the further example. . In the control device 7, after the detection unit detects an accident, the short-circuit-switch control units outputs a close command to the short-circuit switch 6, and before receiving the signal indicating the closing operation of the short-circuit switch 6, the circuit-breaker control unit outputs the current breaking command to the AC circuit breaker 5. The current breaking command by the circuit breaker control unit may be output as long as it is before receiving the signal indicating the close state of the short-circuit switch 6. For example, as illustrated in FIG. 12, the control device 7 may cause the circuit-breaker control unit and the short-circuit-switch control unit to simultaneously output the current breaking command to the AC circuit breaker 5, and the close command to the short-circuit switch 6.

Accordingly, the opening operation timing of the AC circuit breaker 5 and the closing operation timing of the short-circuit switch 6 can become close, and a time at which the accident current passes through the AC circuit breaker 5 can be reduced. As a result, the amount of heat generation in the AC circuit breaker 5 can be suppressed to be less than the specified value for the amount of heat generation of the circuit breaker 5, and the AC circuit breaker 5 can be prevented from being damaged.

### [5. Other Embodiments]

Several embodiments of the present disclosure have been described in this description, however those embodiments are merely presented as examples, and are not intended to limit the scope of the present disclosure. The scope of the present invention is defined by the appended claims.

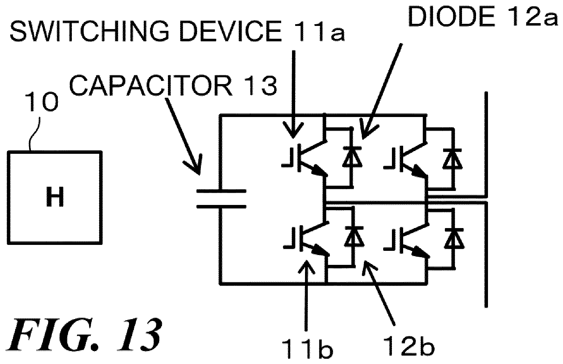

For example, in the above-described embodiments, although the unit converter is the chopper cell 1, it may be a full-bridge cell. As illustrated in FIG. 13, when the unit converter is a full-bridge cell that includes four switching devices 11a and 11b, the capacitor 13 as the DC voltage source, and four diodes 12a and 12b, an accident current due to a DC ground-fault accident, etc., can be broken.

Although the control device 7 controls the ON and OFF timings of the switching devices 11a and 11b of the chopper cell 1, another control device may control such timings.

Although the third embodiment has been described based on the second embodiment, the third embodiment is applicable to the first embodiment, the modified example thereof.

### REFERENCE SIGNS LIST

- 1: Chopper cell
- 10a: Positive-side DC terminal
- 10b: Negative-side DC terminal
- 11a, 11b: Switching device
- 12a, 12b: Diode
- 13: Capacitor
- 2: Leg
- 2a: Positive-side arm
- 2b: Negative-side arm
- 3: Transformer
- 4: Buffer reactor
- 5: AC circuit breaker
- 6: Short-circuit switch
- 7: Control device
- 8: Multi-winding transformer
- 81: AC-system-side winding
- 82: First DC-system-side winding
- 83: Second DC-system-side winding
- 84: Neutral line
- 9: Impedance
- 100: AC System

## Claims

1. A power conversion device which is provided between a DC terminal that includes a positive-side DC terminal (10a) and a negative-side DC terminal (10b), and a three-phase AC terminal, and which is configured to mutually convert power between a DC system and a three-phase AC system (100), the power conversion device comprising:
a positive-side arm (2a) and a negative-side arm (2b) each comprising a plurality of unit converters (1) connected in multistage, each unit converter (1) including a switching device (11a, 11b) and a capacitor (13), the positive-side arm (2a) and the negative-side arm (2b) being provided in each of the three phases, the positive-side arm (2a) and the negative-side arm (2b) being connected in series between the positive-side DC terminal (10a) and the negative-side DC terminal (10b) in each of the three phases;
an AC circuit breaker (5) provided in an AC current path between a three-phase AC system (100) and a connection point between the positive-side arm (2a) and the negative-side arm (2b);
a short-circuit switch (6) which is provided between the positive-side DC terminal (10a) and the negative-side DC terminal (10b), and which is configured to connect the positive-side DC terminal (10a) and the negative-side DC terminal (10b) via a grounded point or directly; and
a control device (7),
wherein the control device (7) comprises:
a circuit-breaker control unit that is configured to output a breaking command to the AC circuit breaker (5); and
a short-circuit-switch control unit that is configured to output a circuit close command to the short-circuit switch (6),
wherein the control device (7) is configured to cause the short-circuit switch control unit to output the close command to the short-circuit switch (6),
**characterised in that**
the control device (7) comprises a detection unit that is configured to detect an accident occurrence at the connection point between the positive-side arm (2a) and the negative-side arm (2b) in a certain phase;
**in that** a buffer reactor (4) is provided at the positive-side arm (2a) and at the negative-side arm (2b), respectively, the buffer reactor (4) of the positive-side arm (2a) being connected in series between the AC terminal and the positive-side arm (2a);
and **in that** the control device (7) is configured to cause the circuit-breaker control unit to output the breaking command to the AC circuit breaker (5) after a signal indicating a close state of the short-circuit switch (6) is received.

2. The power conversion device according to claim 1, wherein the negative-side DC terminal (10b) is grounded, and the short-circuit switch (6) is configured to connect the positive-side DC terminal (10a) and the grounded point.

3. The power conversion device according to claim 1, wherein the positive-side DC terminal (10a) is grounded, and the short-circuit switch (6) is configured to connect the negative-side DC terminal (10b) and the grounded point.

4. A power conversion device which is provided between a DC terminal that includes a positive-side DC terminal (10a) and a negative-side DC terminal (10b), and a three-phase AC terminal, and which is configured to mutually convert power between a DC system and a three-phase AC system (100), the power conversion device comprising:
a positive-side arm (2a) and a negative-side arm (2b) each comprising a plurality of unit converters (1) connected in multistage, each unit converter (1) including a switching device (11a, 11b) and a capacitor (13), the positive-side arm (2a) and the negative-side arm (2b) being provided in each of the three phases, the positive-side arm (2a) and the negative-side arm (2b) being connected in series between the positive-side DC terminal (10a) and the negative-side DC terminal (10b) in each of the three phases;
an AC circuit breaker (5) provided in an AC current path between a three-phase AC system (100) and a connection point between the positive-side arm (2a) and the negative-side arm (2b);
a short-circuit switch (6) which is provided between the positive-side DC terminal (10a) and the negative-side DC terminal (10b), and which is configured to connect the positive-side DC terminal (10a) and the negative-side DC terminal (10b) via a grounded point or directly; and
a control device (7),
acircuit-breaker control unit that is configured to output a breaking command to the AC circuit breaker (5); and
a short-circuit-switch control unit that is configured to output a circuit close command to the short-circuit switch (6), wherein the control device (7) is configured to cause the short-circuit switch control unit to output the close command to the short-circuit switch (6);
**characterised in that**
the power conversion device further comprises a multi-winding transformer (8) connected between the positive-side arm (2a) and the negative-side arm (2b) in each of the three phases;
wherein the multi-winding transformer (8) comprises:
an AC-system-side winding (81) connected to a three-phase AC system (100;
a first DC-system-side winding (82) and a second DC-system-side winding (83) connected in series with opposite polarities between the positive-side arm (2a) and the negative-side arm (2b); and
neutral lines (84) extended from between the first DC-system-side windings (82) and the second DC-system-side windings (83) in the respective three phases and connected with each other,
wherein the short-circuit switch (6) is configured to connect the neutral lines (84) and the grounded point;
**in that** the control device (7) further comprises a detection unit that is configured to detect an accident occurrence at the connection point between the positive-side arm (2a) and the negative-side arm (2b) in a certain phase;
and **in that** the control device (7) is configured to cause the circuit-breaker control unit to output the breaking command to the AC circuit breaker (5) after a signal indicating a close state of the short-circuit switch (6) is received.

5. The power conversion device according to claim 4, wherein the short-circuit switch (6) is configured to connect the neutral lines (84) and the grounded point before a breaking operation of the AC circuit breaker (5).

6. The power conversion device according to any one of claims 4 to 5, wherein a resistor is connected between the short-circuit switch (6) and the grounded point.

7. The power conversion device according to any one of claims 4 to 6, wherein a reactor is connected between the short-circuit switch (6) and the grounded point.

8. The power conversion device according to any one of claims 1 to 7, wherein the short-circuit switch (6) is a semiconductor switch.

## Patentansprüche

1. Stromwandlungsvorrichtung, die zwischen einem Gleichstromanschluss, der einen positiven Gleichstromanschluss (10a) und einen negativen Gleichstromanschluss (10b) aufweist, und einem Dreiphasen-Wechselstromanschluss vorgesehen ist, und die dazu ausgebildet ist, Strom zwischen einem Gleichstromsystem und einem Dreiphasen-Wechselstromsystem (100) ineinander umzuwandeln, wobei die Stromwandlungsvorrichtung umfasst:
einen positiven Zweig (2a) und einen negativen Zweig (2b), die jeweils eine Vielzahl von in mehreren Stufen geschaltete Stromrichtereinheiten (1) umfassen, wobei jede Stromrichtereinheit (1) eine Schaltvorrichtung (11a, 11b) und einen Kondensator (13) aufweist, wobei der positive Zweig (2a) und der negative Zweig (2b) in jeder der drei Phasen vorgesehen sind, wobei der positive Zweig (2a) und der negative Zweig (2b) zwischen dem positiven Gleichstromanschluss (10a) und dem negativen Gleichstromanschluss (10b) in jeder der drei Phasen in Reihe geschaltet sind;
einen Wechselstromleistungsschalter (5), der in einem Wechselstrompfad zwischen einem dreiphasigen Wechselstromsystem (100) und einen Verbindungspunkt zwischen dem positiven Zweig (2a) und dem negativen Zweig (2b) vorgesehen ist;
einen Kurzschlussschalter (6), der zwischen dem positiven Gleichstromanschluss (10a) und dem negativen Gleichstromanschluss (10b) vorgesehen ist und der dazu ausgebildet ist, den positiven Gleichstromanschluss (10a) und den negativen Gleichstromanschluss (10b) über einen geerdeten Punkt oder direkt zu verbinden; und
eine Steuervorrichtung (7),
wobei die Steuervorrichtung (7) umfasst:
eine Leistungsschalter-Steuereinheit, die dazu ausgebildet ist, einen Unterbrechungsbefehl an den Wechselstromleistungsschalter (5) auszugeben; und
eine Kurzschlussschalter-Steuereinheit, die dazu ausgebildet ist, einen Schaltkreisschließbefehl an den Kurzschlussschalter (6) auszugeben, wobei
die Steuervorrichtung (7) dazu ausgebildet ist, zu bewirken, dass die Kurzschlussschalter-Steuereinheit den Schließbefehl an den Kurzschlussschalter (6) ausgibt,
**dadurch gekennzeichnet, dass**
die Steuervorrichtung (7) eine Erkennungseinheit umfasst, die dazu ausgebildet ist, ein Auftreten einer Störung an dem Verbindungspunkt zwischen dem positiven Zweig (2a) und dem negativen Zweig (2b) in einer bestimmten Phase zu erkennen;
dass an dem positiven Zweig (2a) und an dem negativen Zweig (2b) jeweils eine Pufferdrossel (4) vorgesehen ist, wobei die Pufferdrossel (4) des positiven Zweigs (2a) zwischen dem Wechselstromanschluss und dem positiven Zweig (2a) in Reihe geschaltet ist;
und dass die Steuervorrichtung (7) dazu ausgebildet ist, zu bewirken, dass die Leistungsschalter-Steuereinheit den Unterbrechungsbefehl an den Wechselstromleistungsschalter (5) ausgibt, nachdem ein Signal empfangen wird, das einen geschlossenen Zustand des Kurzschlussschalters (6) anzeigt.

2. Stromwandlungsvorrichtung nach Anspruch 1, wobei der negative Gleichstromanschluss (10b) geerdet ist und der Kurzschlussschalter (6) dazu ausgebildet ist, den positiven Gleichstromanschluss (10a) und den geerdeten Punkt zu verbinden.

3. Stromwandlungsvorrichtung nach Anspruch 1, wobei der positive Gleichstromanschluss (10a) geerdet ist und der Kurzschlussschalter (6) dazu ausgebildet ist, den negativen Gleichstromanschluss (10b) und den geerdeten Punkt zu verbinden.

4. Stromwandlungsvorrichtung, die zwischen einem Gleichstromanschluss, der einen positiven Gleichstromanschluss (10a) und einen negativen Gleichstromanschluss (10b) aufweist, und einem Dreiphasen-Wechselstromanschluss vorgesehen ist, und die dazu ausgebildet ist, Strom zwischen einem Gleichstromsystem und einem Dreiphasen-Wechselstromsystem (100) ineinander umzuwandeln, wobei die Stromwandlungsvorrichtung umfasst:
einen positiven Zweig (2a) und einen negativen Zweig (2b), die jeweils eine Vielzahl von in mehreren Stufen geschaltete Stromrichtereinheiten (1) umfassen, wobei jede Stromrichtereinheit (1) eine Schaltvorrichtung (11a, 11b) und einen Kondensator (13) aufweist, wobei der positive Zweig (2a) und der negative Zweig (2b) in jeder der drei Phasen vorgesehen sind, wobei der positive Zweig (2a) und der negative Zweig (2b) zwischen dem positiven Gleichstromanschluss (10a) und dem negativen Gleichstromanschluss (10b) in jeder der drei Phasen in Reihe geschaltet sind;
einen Wechselstromleistungsschalter (5), der in einem Wechselstrompfad zwischen einem Dreiphasen-Wechselstromsystem (100) und einem Verbindungspunkt zwischen dem positiven Zweig (2a) und dem negativen Zweig (2b) vorgesehen ist;
einen Kurzschlussschalter (6), der zwischen dem positiven Gleichstromanschluss (10a) und dem negativen Gleichstromanschluss (10b) vorgesehen ist und der dazu ausgebildet ist, den positiven Gleichstromanschluss (10a) und den negativen Gleichstromanschluss (10b) über einen geerdeten Punkt oder direkt zu verbinden; und
eine Steuervorrichtung (7)
wobei die Steuervorrichtung (7) umfasst:
eine Leistungsschalter-Steuereinheit, die dazu ausgebildet ist, einen Unterbrechungsbefehl an den Wechselstromleistungsschalter (5) auszugeben; und
eine Kurzschlussschalter-Steuereinheit, die dazu ausgebildet ist, einen Stromkreisschließbefehl an den Kurzschlussschalter (6) auszugeben, wobei die Steuervorrichtung (7) dazu ausgebildet ist, zu bewirken, dass die Kurzschlussschalter-Steuereinheit den Schließbefehl an den Kurzschlussschalter (6) ausgibt;
**dadurch gekennzeichnet, dass**
die Stromwandlungsvorrichtung ferner einen Mehrwicklungstransformator (8) umfasst, der zwischen dem positiven Zweig (2a) und dem negativen Zweig (2b) in jeder der drei Phasen geschaltet ist;
wobei der Mehrwicklungstransformator (8) umfasst:
eine wechselstromsystemseitige Wicklung (81), die mit einem Dreiphasen-Wechselstromsystem (100) verbunden ist;
eine erste gleichstromseitige Wicklung (82) und eine zweite gleichstromseitige Wicklung (83), die mit entgegengesetzten Polaritäten zwischen dem positiven Zweig (2a) und dem negativen Zweig (2b) in Reihe geschaltet sind; und
neutrale Leiter (84), die sich zwischen den ersten gleichstromseitigen Wicklungen (82) und den zweiten gleichstromseitigen Wicklungen (83) in den jeweiligen drei Phasen erstrecken und die miteinander verbunden sind,
wobei der Kurzschlussschalter (6) dazu ausgebildet ist, die neutralen Leiter (84) und den geerdeten Punkt zu verbinden,
dass die Steuervorrichtung (7) ferner eine Erkennungseinheit umfasst, die dazu ausgebildet ist, ein Auftreten einer Störung an dem Verbindungspunkt zwischen dem positiven Zweig (2a) und dem negativen Zweig (2b) in einer bestimmten Phase zu erkennen; und
dass die Steuervorrichtung (7) dazu ausgebildet ist, zu bewirken, dass die Leistungsschalter-Steuereinheit den Unterbrechungsbefehl an den Wechselstromleistungsschalter (5) ausgibt, nachdem ein Signal empfangen wurde, das einen geschlossenen Zustand des Kurzschlussschalters (6) anzeigt.

5. Stromwandlungsvorrichtung nach Anspruch 4, wobei der Kurzschlussschalter (6) dazu ausgebildet ist, die neutralen Leiter (84) und den geerdeten Punkt vor einem Unterbrechungsvorgang des Wechselstromleistungsschalters (5) zu verbinden.

6. Stromwandlungsvorrichtung nach einem der Ansprüche 4 bis 5, wobei ein Widerstand zwischen dem Kurzschlussschalter (6) und den geerdeten Punkt geschaltet ist.

7. Stromwandlungsvorrichtung nach einem der Ansprüche 4 bis 6, wobei eine Drossel zwischen den Kurzschlussschalter (6) und den geerdeten Punkt geschaltet ist.

8. Stromwandlungsvorrichtung nach einem der Ansprüche 1 bis 7, wobei der Kurzschlussschalter (6) ein Halbleiterschalter ist.

## Revendications

1. Dispositif de conversion de puissance qui est disposé entre une borne CC qui comprend une borne CC du côté positif (10a) et une borne CC du côté négatif (10b) et une borne CA triphasée, et qui est configurée pour mutuellement convertir la puissance entre un système à courant continu et un système triphasé CA (100), le dispositif de conversion de puissance comprenant :
une branche du côté positif (2a) et une branche du côté négatif (2b) comprenant chacun une pluralité de convertisseurs unitaires (1) connectés en plusieurs étages, chaque convertisseur unitaire (1) comportant un dispositif de commutation (11a, 11b) et un condensateur (13), la branche du côté positif (2a) et la branche du côté négatif (2b) étant prévues en chacune des trois phases, la branche du côté positif (2a) et la branche du côté négatif (2b) étant connectées en série entre la borne CC côté positif (10a) et la borne CC côté négatif (10b) dans chacune des trois phases ;
un disjoncteur CA (5) prévu dans un trajet de courant CA entre un système CA triphasé (100) et un point de connexion entre la branche du côté positif (2a) et la branche du côté négatif (2b) ;
un interrupteur de court-circuit (6) qui est prévu entre la borne CC côté positif (10a) et la borne CC côté négatif (10b) et qui est configuré pour connecter la borne CC côté positif (10a) et la borne CC côté négatif (10b) via un point mis à la terre ou directement ; et
un dispositif de commande (7)
dans lequel le dispositif de commande (7) comprend :
une unité de commande de disjoncteur qui est configurée pour émettre une commande de coupure vers le disjoncteur CA (5) ; et
une unité de commande d'interrupteur de court-circuit configurée pour émettre une commande de fermeture du circuit vers le interrupteur de court-circuit (6),
dans lequel le dispositif de commande (7) est configuré pour amener l'unité de commande d'interrupteur de court-circuit à délivrer la commande de fermeture à l'interrupteur de court-circuit (6)
**caractérisé en ce que**
le dispositif de commande (7) comprend une unité de détection qui est configurée pour détecter une occurrence d'accident au point de connexion entre le bras côté positif (2a) et le bras côté négatif (2b) dans une certaine phase ;
**en ce qu'**un réacteur tampon (4) est prévu sur la branche du côté positif (2a) et à la branche du côté négatif (2b), respectivement, le réacteur tampon (4) de la branche du côté positif (2a) étant connecté en série entre la borne AC et la branche du côté positif (2a) ;
et **en ce que** le dispositif de commande (7) est configuré pour amener l'unité de commande du disjoncteur à émettre la commande de coupure vers le disjoncteur (5) après qu'un signal indiquant un état fermé de l'interrupteur de court-circuit (6) a été reçu.

2. Dispositif de conversion de puissance selon la revendication 1, dans lequel la borne CC du côté négatif (10b) est mise à la masse, et le interrupteur de court-circuit (6) est configuré pour connecter la borne CC du côté positif (10a) et le point mis à la terre.

3. Dispositif de conversion de puissance selon la revendication 1, dans lequel la borne CC du côté positif (10a) est mise à la terre, et le interrupteur de court-circuit (6) est configuré pour connecter la borne CC du côté négatif (10b) et le point mis à la terre.

4. Dispositif de conversion de puissance qui est disposé entre une borne CC qui comprend une borne CC du côté positif (10a) et une borne CC du côté négatif (10b) et une borne CA triphasée, et qui est configurée pour convertir mutuellement la puissance entre un système CC et un système triphasé CA (100), le dispositif de conversion de puissance comprenant :
une branche du côté positif (2a) et une branche du côté négatif (2b) comprenant chacune une pluralité de convertisseurs unitaires (1) connectés en plusieurs étages, chaque convertisseur unitaire (1) comportant un dispositif de commutation (11a, 11b) et un condensateur (13), la branche du côté positif (2a) et la branche du côté négatif (2b) étant prévues dans chacune des trois phases, la branche du côté positif (2a) et la branche du côté négatif (2b) étant connectées en série entre la borne CC du côté positif (10a) et la borne CC du côté négatif (10b) dans chacune des trois phases ;
un disjoncteur CA (5) prévu dans un trajet de courant CA entre un système CA triphasé (100) et un point de connexion entre la branche du côté positif (2a) et la branche du côté négatif (2b) ;
un interrupteur de court-circuit (6) qui est prévu entre la borne CC du côté positif (10a) et la borne CC du côté négatif (10b) et qui est configuré pour connecter la borne CC du côté positif (10a) et la borne CC du côté négatif (10b) via un point mis à la terre ou directement ;
un dispositif de commande (7),
dans lequel le dispositif de commande (7) comprend :
une unité de commande de disjoncteur configurée pour émettre une commande de coupure vers disjoncteur AC (5) et
une unité de commande d'interrupteur de court-circuit qui est configurée pour émettre une commande de fermeture de circuit vers le interrupteur de court-circuit (6), dans lequel le dispositif de commande (7) est configuré pour amener l'unité de commande d'interrupteur de court-circuit à envoyer la commande de fermeture à l'interrupteur de court-circuit (6) ;
**caractérisé en ce que**
le dispositif de conversion de puissance comprend en outre un transformateur à plusieurs enroulements (8) connecté entre la branche du côté positif (2a) et la branche du côté négatif (2b) dans chacune des trois phases ;
dans lequel le transformateur à plusieurs enroulements (8) comprend :
un enroulement côté système CA (81) connecté à un système CA triphasé (100) ;
un premier enroulement côté système CC (82) et un deuxième enroulement côté système CC (83) connectés en série avec des polarités opposées entre la branche du côté positif (2a) et la branche du côté négatif (2b) et
des lignes neutres (84) s'étendant entre les premiers enroulements côté système CC (82) et les deuxièmes enroulements côté système CC (83) dans les trois phases respectives et connectées les unes aux autres,
dans lequel le interrupteur de court-circuit (6) est configuré pour connecter les lignes neutres (84) et le point mis à la terre;
**en ce que** le dispositif de commande (7) comprend en outre une unité de détection qui est configurée pour détecter une occurrence d'accident au point de connexion entre le bras côté positif (2a) et le bras côté négatif (2b) dans une certaine phase ;
et **en ce que** le dispositif de commande (7) est configuré pour amener l'unité de commande de disjoncteur à émettre la commande de coupure vers le disjoncteur (5) après réception d'un signal indiquant un état fermé de l'interrupteur de court-circuit (6).

5. Dispositif de conversion de puissance selon la revendication 4, dans lequel l'interrupteur de court-circuit (6) est configuré pour connecter les lignes neutres (84) et le point mis à la terre avant une opération de coupure du disjoncteur CA (5).

6. Dispositif de conversion de puissance selon une quelconque des revendications 4 à 5, dans lequel une résistance est connectée entre le interrupteur de court-circuit (6) et le point mis à la masse.

7. Dispositif de conversion de puissance selon une quelconque des revendications 4 à 6, dans lequel une réactance est connectée entre l'interrupteur de court-circuit (6) et le point mis à la terre.

8. Dispositif de conversion de puissance selon une quelconque des revendications 1 à 7, dans lequel l'interrupteur de court-circuit (6) est un interrupteur à semi-conducteur.
